# EUROPÄISCHE PATENTSCHRIFT

(11) **EP 3 703 991 B1**
(45) Veröffentlichungstag und Bekanntmachung des Hinweises auf die Patenterteilung: **23.08.2023**
(21) Anmeldenummer: 18829743.6
(22) Anmeldetag: 06.12.2018
(51) Int. Cl.: B61C 3/02, B61C 17/06, B61D 27/00

(54) **SPURGEBUNDENES FAHRZEUG, ANORDNUNG ZUR KÜHLUNG EINER ENERGIESPEICHEREINRICHTUNG DES SPURGEBUNDENEN FAHRZEUGS SOWIE VERFAHREN ZUR STEUERUNG DER ANORDNUNG**
TRACK-GUIDED VEHICLE, ARRANGEMENT FOR COOLING AN ENERGY STORAGE DEVICE OF THE TRACK-GUIDED VEHICLE, AND METHOD FOR CONTROLLING THE ARRANGEMENT
VÉHICULE GUIDÉ, SYSTÈME DE REFROIDISSEMENT D'UN DISPOSITIF DE STOCKAGE D'ÉNERGIE DUDIT VÉHICULE GUIDÉ, ET PROCÉDÉ DE COMMANDE DUDIT SYSTÈME

(30) Priorität: 19.12.2017 DE 102017223214
(43) Veröffentlichungstag der Anmeldung: 09.09.2020
(73) Patentinhaber: Siemens Mobility GmbH, 81739 München (DE)
(72) Erfinder: GLINKA, Martin, 91080 Uttenreuth (DE)
(74) Vertreter: Siemens Patent Attorneys
(86) Internationale Anmeldenummer: PCT/EP2018/083724
(87) Internationale Veröffentlichungsnummer: WO 2019/121029

(56) Entgegenhaltungen:
- DE-A1-102009 050 921
- FR-A1- 2 940 634
- US-A1- 2017 267 056
- -: "Avenio Tram Education City, Doha, Qatar", , 1. Januar 2016 (2016-01-01), XP055574555, Gefunden im Internet: URL:https://assets.new.siemens.com/siemens /assets/public.1493113771.1c4cad8e471b77c5 302db82284f9ed324ce6cb58.avenio-qec-brochu re-en.pdf [gefunden am 2019-03-26] in der Anmeldung erwähnt
- -: "Sitras HES", , 1. Januar 2014 (2014-01-01), XP055574561, Gefunden im Internet: URL:https://www.siemens.com/press/pool/de/ feature/2012/infrastructure-cities/rail-sy stems/2012-08-avenio/produktinformation-si tras-hes-d.pdf [gefunden am 2019-03-26] in der Anmeldung erwähnt

## Beschreibung

Die vorliegende Erfindung betrifft ein spurgebundenes Fahrzeug, eine Anordnung zur Kühlung einer Energiespeichereinrichtung des spurgebundenen Fahrzeugs sowie ein Verfahren zur Steuerung der Anordnung.

Elektrisch angetriebene spurgebundene Fahrzeuge, insbesondere Schienenfahrzeuge, die über eine Oberleitung, eine dritte Schiene oder ähnliches mit elektrischer Energie versorgt werden, sind auf einen vollständigen Ausbau einer zu befahrenden Strecke mit einer solchen Energieversorgung angewiesen. In jüngerer Vergangenheit wird jedoch vermehrt ein Einsatz solcher Fahrzeuge auch auf Strecken ohne einen solchen vollständigen Ausbau angestrebt. Um auch in Abschnitten einer Strecke ohne entsprechende Infrastruktur zur Energieversorgung den Antrieb der Fahrzeuge sicherzustellen, werden diese mit Energiespeichern, beispielsweise in Form von Kondensatoren oder Batterien, ausgestattet.

Ein Beispiel für ein solches Fahrzeug ist die Straßenbahn mit der Bezeichnung Avenio^{®} der Firma Siemens AG, welche für das Projekt Education City in Doha, Katar, mit einem hybriden Energiespeichersystem für Schienenfahrzeuge, bekannt unter der Bezeichnung Sitras^{®} HES ebenfalls der Firma Siemens AG, ausgerüstet wurde (siehe: https://www.mobility.siemens.com/mobility/global/SiteCollecti onDocuments/de/rail-solutions/trams-and-lightrail/avenio_qatar_en.pdf; https://www.siemens.com/press/pool/de/feature/2012/infrastruc ture-cities/rail-systems/2012-08-avenio/produktinformation-sitras-hes-d.pdf). Das genannte Energiespeichersystem besteht aus einer Kombination von Doppelschicht-Kondensatoren und einer Traktionsbatterie, welche sowohl bei Bremsvorgängen des Fahrzeugs generierte, als auch während Stopps an Haltestellen der Straßenbahn zugeführte elektrische Energie speichern.

Eine solche Traktionsbatterie weist eine Vielzahl elektrisch miteinander verbundener Batteriezellen bzw. Module von Batteriezellen mit hoher Leistung und Energiedichte auf. Für eine lange Lebensdauer der Batteriezellen sollten diese innerhalb eines definierten Temperaturbandes betrieben werden, wobei das Temperaturband abhängig von den für die Batteriezellen verwendeten Materialien definiert wird. Insbesondere bei hohen Umgebungstemperaturen ist dabei eine Kühlung der Batteriezellen erforderlich, um deren Temperatur auf einen Wert innerhalb des Temperaturbandes zu halten. Auch erzeugen Batteriezellen beispielsweise bei Lade- und Entladevorgängen selbst Wärme, welche entsprechend abgeführt werden muss. Die Traktionsbatterie des vorstehend genannten hybriden Energiespeichersystems Sitras^{®} HES ist hierzu mit einer Wasserkühlung ausgestattet, welche mitsamt der dafür erforderlichen Klimaanlage in dem Container, in dem die Traktionsbatterie angeordnet ist, integriert ist.

Die Integration einer Klimaanlage im Container der Traktionsbatterie führt jedoch nachteilig zu hohen Kosten und einem erhöhten Raumbedarf.

Aus den Dokumenten US 2017/267056 A1 und FR 2 940 634 A1 ist jeweils ein Fahrzeug, speziell ein Kraftfahrzeug, bekannt, bei welchem ein Kältemittelkreislauf einer Klimaanlage zur Innenraumklimatisierung des Fahrzeugs mit einem Kühlmittelkreislauf zur Kühlung einer Antriebsbatterie über einen Wärmetauscher gekoppelt ist.

Aufgabe der vorliegenden Erfindung ist es, eine insbesondere hinsichtlich Kosten und Raumbedarf günstigere Anordnung zur Kühlung einer Traktionsbatterie anzugeben.

Diese Aufgabe wird durch die Anordnung, das spurgebundene Fahrzeug sowie das Verfahren gemäß den unabhängigen Patentansprüchen gelöst. Weiterbildungen sind in jeweiligen abhängigen Patentansprüchen angegeben.

Gemäß einem ersten Aspekt der Erfindung weist eine Anordnung zur Kühlung einer Traktionsbatterie eines spurgebundenen Fahrzeugs zumindest eine Energiespeichereinrichtung mit zumindest einer Traktionsbatterie zur Versorgung zumindest einer Traktionseinrichtung des Fahrzeugs mit elektrischer Energie und eine Kühleinrichtung zur Kühlung der Traktionsbatterie mittels eines in zumindest einem Kühlmittelkreislauf zirkulierenden Kühlmittels auf. Die Anordnung weist ferner zwei Klimatisierungseinrichtungen auf, welche einen jeweiligen Kältemittelkreislauf aufweisen, in dem zur Klimatisierung eines Fahrgastraums eines Wagens des spurgebundenen Fahrzeugs ein Kältemittel zirkuliert, wobei die Klimatisierungseinrichtungen zusätzlich einen jeweiligen Wärmeübertrager aufweisen, der den Kältemittelkreislauf der jeweiligen Klimatisierungseinrichtung mit einem jeweiligen Kühlmittelkreislauf der Kühleinrichtung der Energiespeichereinrichtung koppelt, und eine Steuereinrichtung zur Steuerung der Klimatisierungseinrichtungen und der Energiespeichereinrichtung auf.

Gemäß einer Weiterbildung des ersten Aspekts der Erfindung wird die Zirkulation des Kühlmittels in dem jeweiligen Kühlmittelkreislauf sowie die Zirkulation des Kältemittels in dem jeweiligen Kältemittelkreislauf durch die Steuereinrichtung gesteuert.

Gemäß einer weiteren Weiterbildung des ersten Aspekts der Erfindung ist in dem jeweiligen Kältemittelkreislauf dem zusätzlichen Wärmeübertrager jeweils zumindest ein Ventil vorgeschaltet, mittels dem die Steuereinrichtung einen Fluss durch den jeweiligen Wärmeübertrager steuert.

Gemäß einer weiteren Weiterbildung des ersten Aspekts ist der jeweilige Wärmeübertrager in dem jeweiligen Kältemittelkreislauf parallel zu einem jeweiligen Verdampfer angeordnet. Gemäß einem zweiten Aspekt der Erfindung weist ein spurgebundenes Fahrzeugs zumindest eine Anordnung gemäß dem ersten Aspekt auf, wobei die Steuereinrichtung ferner ausgestaltet ist, einen Fluss des Kältemittels durch den jeweiligen Wärmeübertrager zu steuern.

Durch das Vorsehen eines zusätzlichen Wärmeübertragers in der Klimatisierungseinrichtung, über den der Kühlmittelkreislauf der Energiespeichereinrichtung mit dem Kältemittelkreislauf der Klimatisierungseinrichtung gekoppelt ist, kann auf eine ausschließlich der Kühlung der Traktionsbatterie dienende Klimatisierungseinrichtung verzichtet werden. Vorteilhaft können hierdurch Kosten sowie erforderlicher Bauraum für die Traktionsbatterie verringert werden.

Gemäß einer Weiterbildung des zweiten Aspekts der Erfindung ist die Steuereinrichtung ferner dazu ausgestaltet, den Fluss des Kühlmittels in dem Kühlmittelkreislauf zu steuern. Hierdurch kann die Steuereinrichtung vorteilhaft dazu verwendet werden, sowohl den Fluss des Kältemittels als auch des Kühlmittels in den Kältemittel- bzw. Kühlmittelkreisläufen zu steuern.

Gemäß einer weiteren Weiterbildung des zweiten Aspekts der Erfindung weisen die Klimatisierungseinrichtungen jeweils zumindest ein dem jeweiligen Wärmeübertrager in dem Kältemittelkreislauf vorgeschaltetes Ventil auf, und ist die Steuereinrichtung ausgestaltet, den Fluss des Kältemittels durch den jeweiligen Wärmeübertrager mittels des Ventils zu steuern. Das von der Steuereinrichtung jeweils gesteuerte Ventil ist vorzugsweise flussaufwärts vor dem jeweiligen Wärmeübertrager angeordnet, wodurch mittels des jeweiligen Ventils der Fluss des Kältemittels durch den jeweiligen Wärmeübertrager reguliert werden kann. Alternativ kann das jeweilige Ventil in gleicher Weise flussabwärts hinter dem jeweiligen Wärmeübertrager angeordnet sein, wobei in diesem Fall jedoch gegebenenfalls nachteilig der Druck des Kühlmittels in dem jeweiligen Wärmeübertrager erhöht wird.

Gemäß einer weiteren Weiterbildung des zweiten Aspekts der Erfindung ist der Wärmeübertrager in dem jeweiligen Kältemittelkreislauf parallel zu einem jeweiligen Verdampfer der Klimatisierungseinrichtung angeordnet. In dem Verdampfer einer so genannten Kaltdampf-Klimaanlage, wie sie in bekannter Weise in spurgebundenen Fahrzeugen eingesetzt wird, verdampft flüssiges Kältemittel und kühlt so durchströmende Luft ab, die dem Fahrgastraum zugeführt wird. Durch die Anordnung des zusätzlichen Wärmeübertragers, welcher beispielsweise in Form eines Wasser/Wasser-Wärmetauschers verwirklicht ist, parallel zu dem Verdampfer wird auch dem Wärmeübertrager flüssiges Kältemittel zugeführt, sodass ein Austausch von Wärme- bzw. Kälteenergie zwischen dem Kältemittel und dem ebenfalls flüssigen Kühlmittel mit einem hohen Wirkungsgrad erfolgen kann.

Gemäß einer weiteren Weiterbildung des zweiten Aspekts der Erfindung weist die Traktionsbatterie eine Mehrzahl Batteriezellen oder eine Mehrzahl Module mit einer jeweiligen Mehrzahl Batteriezellen auf. Durch die Nutzung von Batteriezellen kann vorteilhaft eine einfache und flexible Dimensionierung hinsichtlich der gewünschten Spannung sowie Kapazität der Traktionsbatterie verwirklicht werden.

Gemäß einer weiteren Weiterbildung des zweiten Aspekts der Erfindung dient die Energiespeichereinrichtung ebenfalls einer Versorgung von Hilfsbetrieben des Fahrzeugs mit elektrischer Energie. Diese Hilfsbetriebe können insbesondere auch die im Fahrzeug eingesetzten Klimatisierungseinrichtungen umfassen, für deren Betrieb ebenfalls elektrische Energie erforderlich ist. Dabei werden die Hilfsbetriebe beispielsweise über einen oder mehrere so genannte Hilfsbetriebeumrichter für verschiedene Spannungs- und Frequenzbereiche versorgt, welcher bzw. welche mit dem Gleichspannungs-Zwischenkreis eines Traktionsstromrichters oder direkt mit der Energiespeichereinrichtung verbunden sind.

Ein dritter Aspekt der Erfindung betrifft ein Verfahren zur Steuerung einer Anordnung zur Kühlung einer Traktionsbatterie einer Energiespeichereinrichtung eines spurgebundenen Fahrzeugs, wobei die Energiespeichereinrichtung als Teil der Anordnung einer Versorgung zumindest einer Traktionseinrichtung des Fahrzeugs mit elektrischer Energie dient und weiterhin eine Kühleinrichtung zur Kühlung der Traktionsbatterie mittels eines in zumindest einem Kühlmittelkreislauf zirkulierenden Kühlmittels aufweist, und wobei die Anordnung zumindest eine Klimatisierungseinrichtung zur Klimatisierung eines Fahrgastraums eines Wagens des Fahrzeugs mittels eines in einem Kältemittelkreislauf zirkulierenden Kältemittels sowie eine Steuereinrichtung aufweist. Kennzeichnend wird mittels der Steuereinrichtung ein Fluss des Kältemittels durch einen in den Kältemittelkreislauf zusätzlich angeordneten Wärmeübertrager gesteuert, wobei der Wärmeübertrager den Kältemittelkreislauf mit dem Kühlmittelkreislauf koppelt.

Gemäß einer Weiterbildung des dritten Aspekts der Erfindung werden in der Steuereinrichtung zumindest die Schritte des Erfassens einer aktuellen oder zukünftig erwarteten Temperatur der Traktionsbatterie, des Vergleichens der erfassten Temperatur der Traktionsbatterie mit einer Soll-Temperatur oder einem Soll-Temperaturband, des Ermittelns eines Bedarfs an Kühlleistung für die Kühlung der Traktionsbatterie abhängig von einer bestimmten Temperaturdifferenz, und des Steuerns des Flusses des Kältemittels des Kältemittelkreislaufs der Klimatisierungseinrichtung und des Kühlmittels des Kühlmittelkreislaufs der Kühleinrichtung durch den Wärmeübertrager abhängig von dem ermittelten Bedarf an Kühlleistung ausgeführt.

Die aktuelle Temperatur der Batteriezellen der Traktionsbatterie kann dabei beispielsweise mittels an Batteriezellen bzw. in deren Nähe, beispielsweise an einem Gehäuse eines Moduls angeordneten Temperatursensoren erfasst werden. Alternativ kann mittels Temperatursensoren auch eine Temperatur des Kühlmittels bzw. eine Differenz zwischen der jeweiligen Temperatur des in die Kühleinrichtung einströmenden und aus der Kühleinrichtung herausströmenden Kühlmittels bestimmt und aus dieser Differenz auf eine aktuelle Temperatur der Batteriezellen bzw. der Traktionsbatterie geschlossen werden. Aus einem bekannten Verhalten der Batteriezellen bei einem Ladevorgang, d.h. eine durch den Ladevorgang bzw. das Fließen eines Ladestroms hervorgerufene Erwärmung der Batteriezellen, kann eine erwartete Temperaturerhöhung der Batteriezellen bestimmt werden, sodass die Kühlung der Traktionsbatterie bereits vor Verlassen der Soll-Temperatur bzw. des Soll-Temperaturbandes angesteuert werden kann. Dies kann insbesondere bei einer bekannten zeitlichen Planung der Steuerung des Ladevorgangs vorteilhaft eingesetzt werden. Wenn die Traktionsbatterie beispielsweise an jeder oder bestimmten Haltestellen einer Fahrtstrecke des Fahrzeugs durch dort angeordnete Ladeinfrastruktur geladen wird, kann beispielsweise bereits bei Einfahrt des Fahrzeugs in eine solche Haltestelle der Kühlkreislauf der Traktionsbatterie aktiviert werden. Dies ist insbesondere vorteilhaft, wenn die Traktionsbatterie bereits während des dem Halt vorhergehenden Bremsvorgangs mittels einer elektro-dynamischen Bremse generierter elektrischer Energie geladen wird.

Gemäß einer auf der vorstehenden Weiterbildung basierenden weiteren Weiterbildung des dritten Aspekts der Erfindung steuert die Steuereinrichtung den Fluss des Kältemittels durch einen Verdampfer der Klimatisierungseinrichtung zur Kühlung des Fahrgastraums abhängig von dem ermittelten Bedarf an Kühlleistung für die Traktionsbatterie.

Im Folgenden wird die Erfindung anhand von Ausführungsbeispielen näher erläutert. Dabei zeigen:
- FIG 1: eine schematische Seitenansicht eines spurgebundenen Fahrzeugs,
- FIG 2: eine schematische Darstellung einer nicht- erfindungsgemäßen Anordnung mit nur einer Klimatisierungseinrichtung und einer Energiespeichereinrichtung,
- FIG 3: eine schematische Darstellung einer erfindungsgemäßen Anordnung, und
- FIG 4: ein Ablaufdiagramm eines erfindungsgemäßen Verfahrens.

Aus Gründen der Übersichtlichkeit werden in den Figuren für gleiche bzw. gleich oder nahezu gleich wirkende Komponenten dieselben Bezugszeichen verwendet.

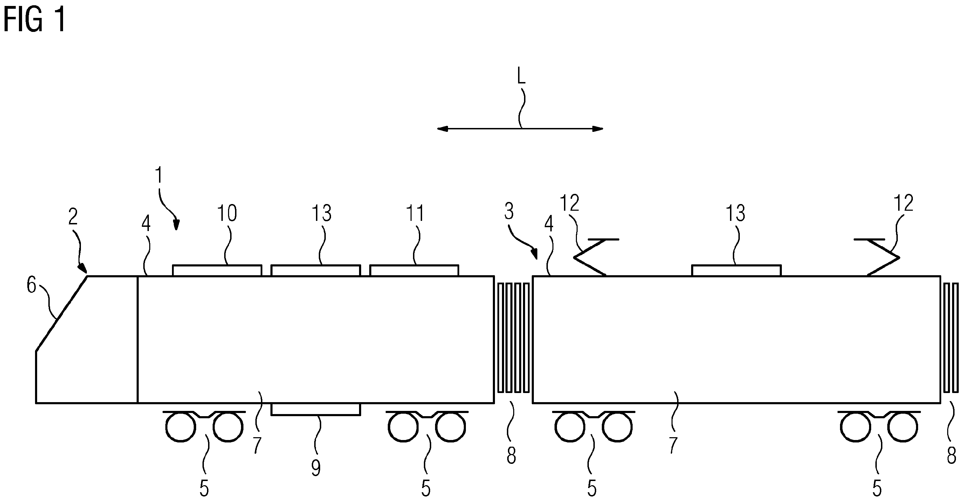

FIG 1 zeigt schematisch eine Seitenansicht eines beispielhaften spurgebundenen Fahrzeugs 1, insbesondere eines Schienenfahrzeugs. Das Schienenfahrzeug 1 ist als beispielsweise als ein Triebzug für den Personentransport mit einer Mehrzahl Wagen ausgestaltet, wobei lediglich ein erster Wagen in Form eines Endwagens 2 sowie ein an den ersten Wagen angekuppelter zweiter Wagen in Form eines Mittelwagens 3 dargestellt sind, an denen sich weitere Wagen anschließen können. Die beiden dargestellten Wagen verfügen jeweils über einen Wagenkasten 4, der sich über Drehgestelle 5 in Form von Trieb- oder Laufdrehgestellen auf nicht dargestellten Schienen abstützt, wobei sich das hintere, rechte Ende des Endwagens 2 und das vordere, linke Ende des Mittelwagens 3 auch auf einem gemeinsamen Drehgestell, insbesondere auf einem so genannten Jakobs-Drehgestell, abstützen können. Der Endwagen 2 ist bezüglich der Längsachse L bzw. horizontalen Achse beispielhaft in mehrere räumliche Bereiche unterteilt. Diese Bereiche sind zum einen ein Führerstand bzw. Kopfmodul 6 im vorderen Bereich, zum anderen ein an den Führerstand 6 angrenzender Wagenkasten 4. Der Wagenkasten 4 umschließt einen Fahrgastraum 7, in dem Sitzmöglichkeiten für Fahrgäste vorgesehen sind. Der mit dem Endwagen 2 verkuppelte Mittelwagen 3 weist im Unterschied zum Endwagen 2 ausschließlich einen Wagenkasten 4 auf, der ebenfalls einen Fahrgastraum 7 umschließt. Die Fahrgasträume 7 der Wagen 2, 3 können von Fahrgästen über in Seitenwänden des jeweiligen Wagenkastens 4 angeordnete, nicht dargestellte Türen betreten und verlassen werden. Weiterhin können Fahrgäste über einen Wagenübergang 8 in den Fahrgastraum 7 des benachbarten Wagens 2, 3 gelangen. Derartige Wagenübergänge 8 werden üblicherweise durch Wellen- oder Faltenbälge vor Umwelteinflüssen geschützt.

Auf dem Dach sowie unter dem Boden bzw. im Unterflurbereich des Wagenkastens 4 des Endwagens 2 sind beispielhaft mehrere elektrische Geräte bzw. Container für solche Geräte oder deren Gehäuse als Teil der elektrischen Ausrüstung des Triebzugs 1 angeordnet. Diese dienen beispielsweise einem Antrieb des Triebzugs 1, insbesondere der Versorgung und Steuerung in der FIG 1 nicht dargestellter Fahrmotoren. Die Fahrmotoren sind beispielsweise in dem als ein Triebdrehgestell ausgestalteten rechten Drehgestell 5 des Endwagens 2 angeordnet, weitere Drehgestelle des Triebzugs 1 können, insbesondere abhängig von der benötigten Antriebsleistung, ebenfalls mit Fahrmotoren ausgerüstet sein. Im Unterflurbereich des Wagenkastens 4 ist beispielsweise ein Transformator 9 angeordnet, dessen Primärwicklung über beispielhaft auf dem Dach des Wagenkastens 4 des Mittelwagens 3 angeordnete Stromabnehmer 12 mit einer nicht dargestellten einen Hochspannungs-Wechselstrom führenden Oberleitung verbunden werden kann. Auf der linken Seite des Dachs des Wagenkastens 4 des Endwagens 2 ist hingegen beispielhaft ein mit dem Transformator 9 verbundener Traktionsstromrichter 10 zur Versorgung der Fahrmotoren mit elektrischer Energie angeordnet. Auf der rechten Seite des Dachs des Wagenkastens 4 des Endwagens 2 ist beispielhaft eine Energiespeichereinrichtung 11 mit einer Traktionsbatterie angeordnet, die beispielsweise mit einem Gleichspannungs-Zwischenkreis des Traktionsstromrichters 10 verbunden ist. Mittig auf den Dächern der Wagenkästen 4 der dargestellten Wagen 2, 3 ist beispielhaft jeweils eine Klimaanlage 13 angeordnet, die der Klimatisierung des darunter befindlichen Fahrgastraums 7 dient.

Neben den beispielhaft dargestellten Komponenten der elektrischen Ausrüstung des Triebzugs können weitere Komponenten, insbesondere Steuereinrichtungen, weitere Hilfsbetriebe sowie Einrichtungen zu deren Versorgung in gleicher Weise auf dem Dach, im Unterflurbereich oder auch im Innenraum der Wagenkästen angeordnet werden. Auch ist die dargestellte Anordnung spezieller Komponenten, insbesondere der Traktionsbatterie 11, auf dem Dach und im Unterflurbereich der Wagenkästen ist lediglich beispielhaft. Der Transformator 9 kann beispielsweise auch auf dem Dach oder im Innenraum des Wagenkastens angeordnet werden, während beispielsweise die Klimaanlage 13 jeweils im Unterflurbereich des Wagenkastens angeordnet werden kann. Für weitere Teile der elektrischen Ausrüstung des Triebzugs gilt entsprechendes.

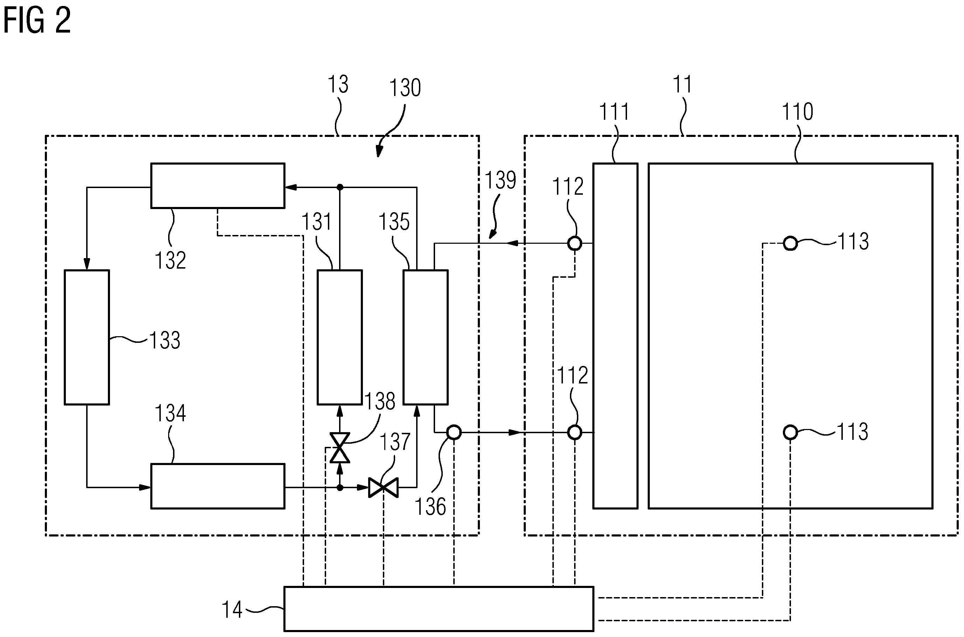

FIG 2 zeigt schematisch einen jeweils beispielhaften Aufbau der in FIG 1 auf dem Dach des Endwagens 2 nebeneinander angeordneten Komponenten Klimaanlage 13 und Traktionsbatterie 11, welche in der Figur jeweils durch eine strich-punktierte Linie begrenzt sind. Für den Fall, dass in dem Endwagen 2 keine Klimaanlage angeordnet ist, insbesondere wenn dieser keinen Fahrgastraum aufweist, können die beiden Komponenten Klimaanlage 13 und Energiespeichereinrichtung 11 mit Traktionsbatterie 110 auch auf unterschiedlichen, beispielsweise benachbarten Wagen angeordnet sein.

Der Aufbau der beispielhaft dargestellten Klimaanlage 13 entspricht grundsätzlich dem Aufbau einer so genannten Kaltdampf-Klimaanlage, wie sie bereits in Wagen von Triebzügen eingesetzt wird. Diese weist einen Kältemittelkreislauf 130 mit im Wesentlichen vier Komponenten auf, deren jeweilige Funktion nachfolgend kurz erläutert wird. Die einzelnen Komponenten sind in bekannter Weise durch Leitungen, Rohre oder Schläuche für den Transport des Kältemittels in flüssigem und gasförmigem Zustand miteinander verbunden. Üblicherweise werden die Komponenten der Klimaanlage in einem gemeinsamen Gehäuse angeordnet, welches aus Gründen der Übersichtlichkeit nicht dargestellt ist.

Eine Kaltdampf-Klimaanlage arbeitet nach dem Prinzip einer Kompressionskälteanlage, gemäß dem ein zirkulierendes Kältemittel gasförmig komprimiert wird, infolge von Wärmeabgabe kondensiert und durch Druckminderung unter Wärmeaufnahme wieder verdampft. Auf die vier dargestellten wesentlichen Komponenten der Klimaanlage abgebildet, bedeutet dies, dass warme Luft aus dem Fahrgastraum sowie gegebenenfalls zusätzlich von außerhalb des Fahrgastraums zugeführte Frischluft mithilfe eines nicht dargestellten Gebläses durch einen Verdampfer 131 strömt. Im Verdampfer 131, der prinzipiell die Funktion eines Luft/Wasser-Wärmeübertragers hat, verdampft das beispielsweise auf 8°C herunter gekühlte flüssige Kältemittel und kühlt so die durchströmende Luft ab. Die so abgekühlte Luft wird über in der Regel im Innendeckenbereich des Wagens angeordnete Frischluftkanäle sowie Luftauslässe an geeigneten Stellen der Innendecke im Fahrgastraum des Wagens verteilt. Ein dem Verdampfer 131 in Flussrichtung des Kältemittels nachgeschalteter Verdichter 132, beispielsweise ein Kompressor, saugt den generierten Kältemitteldampf ein und erhöht dessen Druck von 3,8 bar am Ausgang des Verdampfers 131 auf 17 bar. Gleichzeitig erhöht sich durch die Verdichtung die Temperatur des Kältemitteldampfes von 13°C auf beispielsweise 100°C. In einem dem Verdichter 132 in Flussrichtung des Kältemittels nachgeschalteten Verflüssiger 133, der die Funktion eines Luft/Wasser-Wärmeübertragers hat, wird Außenluft genutzt, um den Kältemitteldampf auf beispielsweise 60°C abzukühlen, sodass sich dieser wieder verflüssigt. Schließlich wird mittels eines dem Verflüssiger 133 in Flussrichtung des Kältemittels nachgeschalteten Entspanners 134, beispielsweise ein Expansionsventil, der Druck das Kältemittel auf die genannten beispielhaften 3,8 bar reduziert, sodass es sich auf vorstehend genannte Temperatur von 8°C abkühlt. Das abgekühlte flüssige Kältemittel fließt schließlich wieder in den Verdampfer 131, wodurch sich der Kältemittelkreislauf schließt.

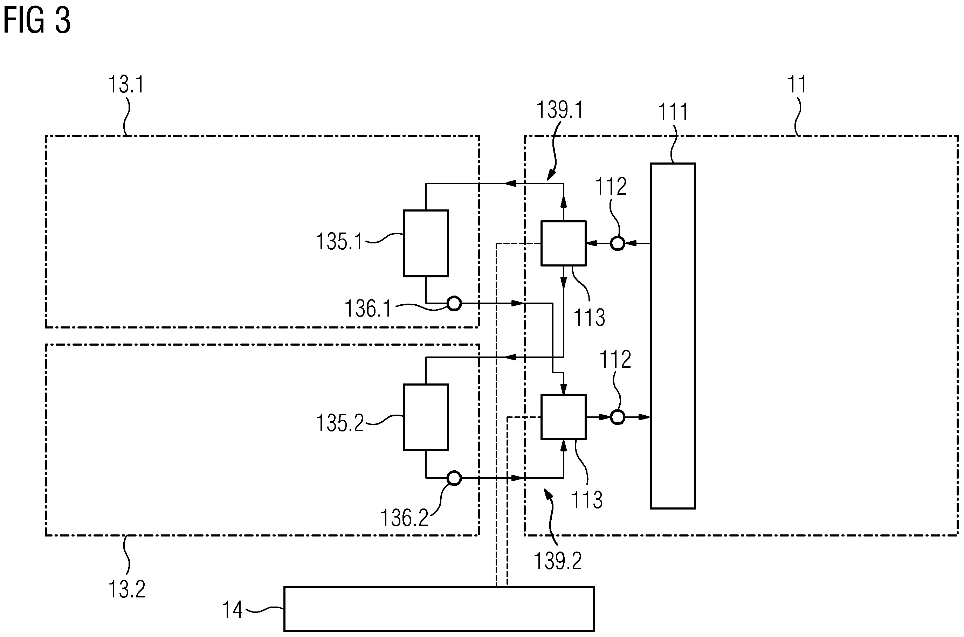

Die vorstehend beschriebene Klimaanlage 13 mitsamt den genannten Komponenten kann für jeden Wagen des Triebzugs vorzugsweise auch redundant ausgeführt sein, wie es beispielhaft schematisch in FIG 3 dargestellt ist. Dies bedeutet, dass eine maximale Kühlleistung nur von beiden Klimaanlagen bereit gestellt werden kann, jede der Klimaanlagen somit lediglich einen Teil der maximalen Kühlleistung bereit stellen kann. Vorteilhaft kann hierdurch im Falle eines Ausfalls einer der beiden Klimaanlagen eine zumindest teilweise Kühlung des zugehörigen Fahrgastraums sicherstellen. Andererseits kann bei einem Kühlleistungsbedarf für den Fahrgastraum, der von einer der beiden Klimaanlagen befriedigt werden kann, die andere Klimaanlage abgeschaltet werden, wodurch vorteilhaft die Effizienz der Anlage erhöht und damit einhergehend Kosten gesenkt werden können. Das Bereitstellen zumindest eines Teils der Kühlleistung ist insbesondere für Triebzüge für den Hochgeschwindigkeitsbereich von Bedeutung, um das Wohlbefinden von Fahrgästen insbesondere bei hohen Umgebungstemperaturen sicherzustellen. Bei solchen Triebzügen erfolgt die Frischluftzufuhr üblicherweise ausschließlich über die Klimaanlage eines Wagens, während Fenster des Wagens als eine mögliche alternative Art der Zufuhr von Frischluft nicht geöffnet werden können.

Die beispielhaft in FIG 2 dargestellte Energiespeichereinrichtung 11 weist zumindest eine Traktionsbatterie 110 auf, welche aus einer oder mehreren Modulen mit einer jeweiligen Mehrzahl von elektrisch miteinander verbundenen Batteriezellen besteht. Die Batterie bzw. einzelne Zellmodule sind üblicherweise in einem gemeinsamen Gehäuse angeordnet, welches einen Schutz der Batteriezellen vor Umwelteinflüssen gewährleistet. Ein solches Gehäuse ist wiederum aus Gründen der Übersichtlichkeit nicht gesondert in FIG 2 dargestellt.

Aufgrund der einleitend beschriebenen Anforderungen an die Betriebstemperatur der Batteriezellen zur Gewährung einer hohen Energiedichte und Lebensdauer ist die Traktionsbatterie 110 mit einer Kühleinrichtung 111 verbunden. Diese kann beispielsweise in Form von mit den einzelnen Batteriezellen bzw. dem Gehäuse eines Zellmoduls verbundenen Kühlkörpern verwirklicht sein, durch die ein flüssiges Kühlmittel zirkuliert. Beispielhaft ist in der FIG 2 die Kühleinrichtung 111 nur seitlich der Traktionsbatterie 110 dargestellt, in der Praxis sollte die Kühleinrichtung 111 bzw. deren Kühlkörper jedoch vorzugsweise im Wesentlichen vollständig die von der Traktionsbatterie 110 bzw. deren Batteriezellen beanspruchte Grundfläche abdecken, um eine gleichmäßige Kühlung bzw. Erwärmung der Batteriezellen zu gewährleisten. Abhängig von der Umgebungstemperatur oder dem aktuellen Zustand der Batteriezellen wird das Kühlmittel erwärmt bzw. gekühlt, um die Temperatur der Batteriezellen innerhalb des bevorzugten Arbeitstemperaturbereichs zu halten. Vorzugsweise sind im Bereich des Eintritts des Kühlmittels in die Kühleinrichtung 111 sowie im Bereich des Austritts des Kühlmittels aus der Kühleinrichtung 111 jeweils Temperatursensoren 112 angeordnet, mit denen Eintritts- und Austrittstemperaturen des Kühlmittels bestimmt werden können. Diese bestimmten Temperaturen dienen beispielsweise dazu, eine mittlere Temperatur der Batteriezellen der Traktionsbatterie 110 zu bestimmen und daraus einen Bedarf für eine verringerte oder erhöhte Zufuhr von Kühlmittel bzw. dessen Temperatur abzuleiten. Zusätzlich können weitere Temperatursensoren 113, wie sie in FIG 2 beispielhaft ergänzend dargestellt sind, in dem Gehäuse der Traktionsbatterie 110 und/oder in bzw. an Gehäusen einzelner Zellmodule vorgesehen werden, um eine genauere Bestimmung der jeweiligen Temperatur der Batteriezellen bzw. Zellmodule zu ermöglichen.

In dem einleitend beschriebenen bekannten hybriden Energiespeichersystem für Schienenfahrzeuge Sitras^{®} HES der Firma Siemens AG ist in dem Gehäuse der Traktionsbatterie eine Klimaanlage integriert, welche der Kühlung des Kühlmittels für die Batteriezellen dient. Die Energiespeichereinrichtung 11 gemäß der Erfindung weist hingegen keine gesonderte und mit der Traktionsbatterie in einem Gehäuse integrierte Klimaanlage auf. Vielmehr wird die beschriebene Klimaanlage 13 für die Klimatisierung des Fahrgastraums 7 eines Wagens bzw. deren Kältemittelkreislauf 130 durch einen zusätzlichen Wasser/Wasser-Wärmeübertrager 135 ergänzt.

Der zusätzliche Wärmeübertrager 135 ist dabei in dem beschriebenen Kältemittelkreislauf 130 parallel zum Verdampfer 131 angeordnet, sodass das auf beispielsweise 8°C abgekühlte flüssige Kältemittel bei Betrieb des Verdichters 132 sowohl durch den Verdampfer 131 als auch durch den Wärmeübertrager 135 fließen kann. Mittels einer Flüssigkeitspumpe 136, beispielsweise einer Umwälzpumpe, wird das Kühlmittel zur Kühlung der Traktionsbatterie 110 durch den Wärmeübertrager 135 transportiert und durch das vorbeiströmende Kältemittel abgekühlt, während das Kältemittel durch das vorbeiströmende Kühlmittel erwärmt wird und in den gasförmigen Zustand übergeht. Der Transport des Kühlmittels zwischen der Kühleinrichtung 111 der Traktionsbatterie 110 und dem Wärmeübertrager 135 der Klimaanlage 13 erfolgt mittels geeigneter Rohre, Leitungen oder Schläuche. Diese sollten, sofern sie außerhalb des Wagenkastens angeordnet sind, vorzugsweise ergänzend mit einem geeigneten Material thermisch isoliert werden, um eine Abgabe von Kälte- oder Wärmeenergie an die Umgebung zu minimieren. Eine Anordnung außerhalb des Wagenkastens ist insbesondere in der beispielhaften Konfiguration des Triebzugs 1 der FIG 1, in der sowohl die Klimaanlage 13 als auch die Energiespeichereinrichtung 11 auf dem Dach des Wagenkastens 4 angeordnet sind, wahrscheinlich.

In dem Beispiel der FIG 2 wird ein nach dem Prinzip des Gegenstroms operierender Wärmeübertrager 135 eingesetzt, bei dem Kältemittel und Kühlmittel entgegenkommend aneinander vorbeiströmen, wie es durch die mittels Pfeilen angedeutete jeweilige Flussrichtung des Kältemittels und Kühlmittels dargestellt ist. Andere bekannte Typen Wärmeübertrager können jedoch in gleicher Weise eingesetzt werden. Die in dem Beispiel der FIG 2 im Bereich der Klimaanlage 13 angeordnete Flüssigkeitspumpe 136 kann in gleicher Weise auch im Bereich der Energiespeichereinrichtung 11, insbesondere in der Kühleinrichtung 111 angeordnet sein.

Die Funktion der Klimaanlage 13 für den Fahrgastraum 7 des Endwagens 2 wird durch eine beispielsweise ebenfalls in dem Endwagen 2 angeordnete Steuereinrichtung 14 gesteuert. Diese kann beispielsweise nur die Klimaanlage 13 des Endwagens 2 steuern, alternativ kann sie jedoch auch derart ausgestaltet sein, dass sie als eine zentrale Steuereinrichtung die Klimaanlagen aller Wagen des Triebzugs 1 steuert. Die Steuereinrichtung 14 kann zudem Teil einer übergeordneten zentralen Steuereinrichtung, insbesondere für die Steuerung von Hilfsbetrieben des Triebzugs 1 sein. Die Steuereinrichtung 14 steuert, beispielsweise abhängig von einem Vergleich einer aktuellen Ist-Temperatur mit einer eingestellten bzw. vorgegebenen Soll-Temperatur des Fahrgastraums 7 den Verdichter 132 der Klimaanlage 13 an. Die Ansteuerung erfolgt dabei beispielsweise mittels einer elektrischen Steuerleitung, wie sie beispielhaft in FIG 2 in Form einer von der Steuereinrichtung 14 zu dem Verdichter 132 geführten gestrichelten Linie angegeben ist. Nach Einschalten des Verdichters 132 führt dessen Betrieb zu einem Zirkulieren des Kältemittels in dem Kältemittelkreislauf 130, während ein Abschalten des Verdichters 132 durch die Steuereinrichtung 14 die Zirkulation des Kältemittels unterbricht. Für die Funktion des Verdampfers 131 und Verflüssigers 133 bei zirkulierendem Kältemittel steuert die Steuereinrichtung 14 ferner die diesen Komponenten zugehörigen Ventilatoren bzw. Gebläse an, um Luft durch die entsprechenden Luft/Wasser-Wärmeübertrager zu führen. Die Ventilatoren bzw. Gebläse werden ebenfalls mittels elektrischer Steuerleitungen von der Steuereinrichtung 14 angesteuert, wobei diese Steuerleitungen jedoch ebenso wie die Ventilatoren bzw. Gebläse nicht gesondert in FIG 2 dargestellt sind.

In dem durch den zusätzlichen Wärmeübertrager 135 erweiterten Kältemittelkreislauf 130 sind beispielhaft zwei Einwegventile 137, 138 angeordnet, mittels denen der Fluss des Kältemittels zu dem Verdampfer 131 und dem Wärmeübertrager 135 gesteuert werden kann. Diese Ventile 137, 138 können alternativ zu der dargestellten Anordnung dem Verdampfer 131 und dem Wärmeübertrager 135 in Flussrichtung des Kältemittels auch jeweils nachgeschaltet sein. Weiterhin können die beiden Ventile 137, 138 auch durch ein Dreiwegeventil ersetzt werden, welches einen Fluss des Kältemittels nur zum Verdampfer 131, nur zum Wärmeübertrager 135 oder sowohl zum Verdampfer 131 als auch zum Wärmeübertrager 135 ermöglicht. Es ist jedoch ebenfalls möglich, lediglich das den Fluss des Kältemittels zum Wärmeübertrager 135 steuernde Ventil 137 vorzusehen, insbesondere dann, wenn ein Kühlbedarf des Fahrgastraums 7 immer auch dann existiert, wenn ein Kühlbedarf der Traktionsbatterie 11 vorliegt. Die Ventile 137, 138 bzw. das alternativ mögliche eine Dreiwegeventil werden wiederum mittels elektrischer Steuerleitungen von der Steuereinrichtung 14 gesteuert.

Die unterschiedlichen, durch die Steuereinrichtung 14 gesteuerten Schaltzustände der Ventile 137, 138 hängen von einem jeweiligen Kühlbedarf des Fahrgastraums 7 des Wagens und der Traktionsbatterie 110 ab. So ist beispielsweise bei Befahren eines elektrifizierten Streckenabschnitts, während dessen der Triebzug 1 über beispielsweise eine Oberleitung mit elektrischer Energie versorgt wird und die Traktionsbatterie 110 weder geladen, noch entladen wird, in der Regel eine Kühlung der Traktionsbatterie 11 nicht erforderlich. In dieser Situation schließt die Steuereinrichtung 14 das dem Wärmeübertrager 135 vorgeschaltete Ventil 137, sodass die Klimaanlage 13 in bekannter Weise bedarfsabhängig ausschließlich der Kühlung des Fahrgastraums 7 dient. Sofern in dieser Situation auch für den Fahrgastraum kein Kühlbedarf existiert, beispielsweise weil die Temperatur des Fahrgastraums 7 im Bereich oder unterhalb der Soll-Temperatur liegt, kann die Steuereinrichtung 14 auch den Betrieb des Verdichters 132 abschalten und damit den Kältemittelfluss in dem Kältemittelkreislauf 130 beenden.

Hingegen kann es bei Betrieb des Triebzugs 1 auf einem nicht elektrifizierten Streckenabschnitt, bei dem elektrische Energie für den Antrieb des Triebzugs 1 aus der Traktionsbatterie 110 entnommen wird, durch den Entladungsprozess zu einer Erwärmung der Batteriezellen oberhalb eines vorgegebenen Temperaturschwellwerts kommen, die eine Kühlung der Traktionsbatterie erforderlich macht. Eine derartige Erwärmung der Batteriezellen kann beispielsweise auch während eines Ladevorgangs der Traktionsbatterie 11 auftreten oder wenn die Umgebungstemperatur nahe dem Temperaturschwellwert liegt. Die Erwärmung von Batteriezellen bzw. Zellmodulen kann beispielsweise über die in FIG 2 angegebenen Temperatursensoren 113 erfasst werden oder bei Betrieb der Kühlmittelpumpe 136 durch die Differenz zwischen den von den Temperatursensoren 112 gemessenen Temperaturen des Kühlmittels bestimmt werden. Alternativ kann jedoch auch bei bekanntem Verhalten von Batteriezellen auf Basis einer Messung des Lade- bzw. Entladestroms auf die Temperatur der Batteriezellen bzw. der Zellmodule geschlossen werden. In diesen Fällen öffnet die Steuereinrichtung 14 das Ventil 137, sodass bei Betrieb des Verdichters 132 Kältemittel durch den Wärmeübertrager 135 fließt. Ferner steuert die Steuereinrichtung 14 die Flüssigkeitspumpe 136 entsprechend dem Bedarf der Traktionsbatterie 110 an Kühlleistung an, damit im Wärmeübertrager 135 abgekühltes Kühlmittel durch den Kühlmittelkreislauf 139 der Kühleinrichtung 111 zirkuliert und die Batteriezellen bzw. Zellmodule der Traktionsbatterie 110 kühlt. Abhängig davon, ob während des Zeitraums der Kühlung der Traktionsbatterie 110 auch eine Kühlung des Fahrgastraums 7 erforderlich ist, schließt bzw. öffnet die Steuereinrichtung 1 das dem Verdampfer 131 vorgeschaltete Ventil 138 und steuert entsprechend die Funktion des Ventilators bzw. Gebläses des Verdampfers 131.

Die Komponenten Verdichter 132, Verflüssiger 133, Entspanner 134 sowie gegebenenfalls die diese Komponenten verbindenden Rohre, Leitungen oder Schläuche ebenso wie weitere, vorstehend nicht beschriebene Komponenten der Klimaanlage 13 müssen dem erhöhten Bedarf an Kühlleistung bedingt durch die zusätzliche Kühlung der Traktionsbatterie 11 gegenüber dem bekannten ausschließlichen Einsatz zur Kühlung des Fahrgastraums 7 eines Wagens angepasst werden. Prinzipiell sind die Komponenten der Klimaanlage hierzu entsprechend einer Summe der maximal benötigten Kühlleistung für den Fahrgastraum 7 und die Traktionsbatterie 110 zu dimensionieren. Jedoch kann die vergleichsweise große thermische Zeitkonstante des Fahrgastraums, dies bedeutet, dass sich die Temperatur des Fahrgastraums nur vergleichsweise langsam verändert, vorteilhaft dazu genutzt werden, die Kühlleistung für den Fahrgastraum beispielsweise während des Zeitraums eines Ladevorgangs der Traktionsbatterie 110 oder eines begrenzten Teils des Zeitraums zu reduzieren, insbesondere bis auf null zu reduzieren, sodass eine höhere Kühlleistung für die Traktionsbatterie zur Verfügung steht. Unter Berücksichtigung einer solchen Steuermöglichkeit können die maximale Kühlleistung der Klimaanlage 13 somit niedriger als die Summe der maximal benötigten Kühlleistung für Fahrgastraum 7 und Traktionsbatterie 110 gewählt und die genannten Komponenten entsprechend dimensioniert werden.

Bei einer vorstehend bereits erwähnten redundanten Ausführung der Klimaanlage 13 ist die Versorgung der Energiespeichereinrichtung 11 mit Kühlleistung mit einer größeren Flexibilität möglich. Ein solch redundanter Aufbau ist schematisch in FIG 3 dargestellt, wobei von einer Darstellung einzelner, vorstehend bereits erläuterter Komponenten bzw. Bestandteile der Klimaanlage 13 und der Energiespeichereinrichtung 11 abgesehen wurde. Die Klimaanlage besteht in diesem Fall aus zwei getrennt aufgebauten Klimaanlagen 13.1 und 13.2, die jeweils entsprechend der in FIG 2 dargestellten Klimaanlage 13 aufgebaut sind und jeweils einen Teil der maximalen Kühlleistung bereit stellen können. Die beiden Klimaanlagen 13.1, 13.2 können in getrennten Gehäusen bzw. Containern, alternativ jedoch auch in einem gemeinsamen Gehäuse bzw. Container beispielsweise wiederum auf dem Dach des Wagenkastens angeordnet werden. Die in den Klimaanlagen 13.1, 13.2 integrierten zusätzlichen Wärmeübertrager 135.1, 135.2 für die Kühlung der Traktionsbatterie sind jeweils über geeignete Rohre, Leitungen oder Schläuche für den Transport des Kühlmittels mit der Kühleinrichtung 111 in der Energiespeichereinrichtung 11 verbunden. In der Kühleinrichtung 111 der Energiespeichereinrichtung 11 kann für jede Klimaanlage 13.1, 13.2 ein getrennter Kühlmittelkreislauf 139.1, 139.2 vorgesehen sein, jedoch können die Kühlmittelkreisläufe alternativ auch in der Kühleinrichtung zusammengeführt werden bzw., in Flussrichtung des Kühlmittels gesehen, vor der Kühleinrichtung 111 zusammengeführt und hinter dieser wieder aufgetrennt werden, wie dies beispielhaft in FIG 3 dargestellt ist.

Bei einem Zusammenführen der Kühlmittelkreisläufe 139.1, 139.2 sollten in allen Kühlmittelzuflüssen und -abflüssen der Kühleinrichtung 111 vorzugsweise Ventile angeordnet werden. Hierfür kann beispielsweise in jedem Zufluss und Abfluss ein Einwegventil entsprechend den zu FIG 2 beschriebenen Einwegventilen 137, 138 vorgesehen werden, welche ebenfalls durch die Steuereinrichtung 14 über Steuerleitungen gesteuert werden. Alternativ können jedoch auch Dreiwegeventile 113 eingesetzt werden, wie sie beispielhaft in FIG 3 in der Energiespeichereinrichtung 11 angeordnet sind. Die Einwegventile bzw. Dreiwegeventile 113 können alternativ auch in den Klimaanlagen 13.1, 13.2 oder in nur einer der beiden Klimaanlagen 13.1, 13.2 angeordnet sein, wobei in letzterem Fall Rohre, Leitungen oder Schläuche zumindest eines Kühlmittelkreislaufs 139.1, 139.2 zwischen den beiden Klimaanlagen 13.1, 13.2 geführt werden müssten.

Mittels einer geeigneten Ansteuerung der Ventile 113 und der Kühlmittelpumpen 136.1, 136.2 über elektrische Steuerleitungen kann die Steuereinrichtung 14 den Kühlmittelfluss durch die Kühleinrichtung 111 der Energiespeichereinrichtung 11 bedarfsabhängig steuern. So kann bei einem nur mittleren Bedarf an Kühlleistung beispielsweise nur einer der beiden Kühlmittelkreisläufe aktiviert werden. Sofern dies beispielsweise der von der unteren Klimaanlage 13.2 über den Wärmeübertrager 135.2 gespeiste untere Kühlmittelkreislauf 139.2 ist, steuert die Steuereinrichtung 14 die Kühlmittelpumpe 136.2 sowie die Dreiwegeventile 113 derart an, dass Kühlmittel in dem unteren Kühlmittelkreislauf 139.2 durch den Wärmeübertrager 135.2 und die Kühleinrichtung 111 zirkulieren kann, während in dem oberen, von der oberen Klimaanlage 13.1 über den Wärmeübertrager 135.1 gespeisten Kühlmittelkreislauf 139.1 kein Kühlmittel zirkuliert. Insbesondere wenn auch für den Fahrgastraum ein nur mittlerer Bedarf an Kühlleistung besteht, kann ein alleiniger Betrieb der unteren Klimaanlage 13.2 sowohl für die Kühlung des Fahrgastraums 7 als auch der Traktionsbatterie 11 ausreichend sein.

Bei einem hohen Bedarf an Kühlleistung sowohl für den Fahrgastraum als auch für die Traktionsbatterie, wie er beispielsweise während eines Ladevorgangs der Traktionsbatterie bei gleichzeitig hoher Umgebungstemperatur der Fall sein kann, werden hingegen beide Klimaanlagen 13.1, 13.2 betrieben, um den Kühlleistungsbedarf zu decken. In diesem Fall steuert die Steuereinrichtung 14 die Kühlmittelpumpen 136.1, 136.2 sowohl des unteren als auch des oberen Kühlmittelkreislaufs 139.1 sowie die Dreiwegeventile 113 derart an, dass Kühlmittel beider Kühlmittelkreisläufe 139.1, 139.2 durch die Kühleinrichtung 111 der Energiespeichereinrichtung 11 zirkulieren. Zudem kann die Steuereinrichtung 14 durch eine vorstehend zu FIG 2 beschriebene Ansteuerung des jeweiligen Verdichters und der jeweiligen Einwegventile der beiden Klimaanlagen 13.1, 13.2 den Fluss von Kältemittel durch die Verdampfer und Wärmeübertrager 135.1, 135.2 derart regulieren, dass eine ausreichende Kühlleistung für die Traktionsbatterie bereit gestellt wird. Wie vorstehend bereits erwähnt, kann bei einem hohen Bedarf an Kühlleistung für die Traktionsbatterie 110 die Kühlleistung für den Fahrgastraum temporär, beispielsweise während des gesamten oder eines Teils des Zeitraums des Ladevorgangs der Traktionsbatterie 110, zugunsten der Kühlleistung für die Traktionsbatterie reduziert werden, da sich die Temperatur des Fahrgastraums nur vergleichsweise langsam erhöht. Nach Abschluss des Ladevorgangs bzw. nach einer Verringerung des Bedarfs an Kühlleistung für die Traktionsbatterie kann durch entsprechende Ansteuerung der Ventile in den beiden Klimaanlagen 13.1, 13.2 wieder eine erhöhte Kühlleistung für den Fahrgastraum bereit gestellt werden, sodass sich die nach diesem Zeitraum gegebenenfalls außerhalb eines Soll-Temperaturbandes befindliche Ist-Temperatur des Fahrgastraums dem Sollwert wieder annähern kann.

Die Ansteuerung der Klimaanlagen 13.1, 13.2 und der Ventile 113 in der Traktionsbatterie 11 durch die Steuereinrichtung 14 kann in dieser Situation insbesondere derart erfolgen, dass der hohe Bedarf an Kühlleistung für die Traktionsbatterie 11 ausschließlich oder zumindest überwiegend durch eine der beiden Klimaanlagen 13.1, 13.2 gedeckt wird, während der Bedarf an Kühlleistung für den Fahrgastraum ausschließlich bzw. zumindest überwiegend durch die andere der beiden Klimaanlagen 13.1, 13.2 gedeckt wird. Alternativ können jedoch in gleicher Weise beide Klimaanlagen 13.1, 13.2 sowohl Kühlleistung für die Traktionsbatterie 11 als auch für den Fahrgastraum bereit stellen.

Vorzugsweise erfolgt die Ansteuerung der beschriebenen Komponenten der Klimaanlagen 13.1, 13.2 und der Energiespeichereinrichtung 11 mit dem Ziel eines möglichst effizienten Betriebs. Insbesondere ist ein Volllastbetrieb oder nahezu Volllastbetrieb einer der Klimaanlagen effizienter als ein jeweiliger Teillastbetrieb beider Klimaanlagen. Gleichsam sollte bei der Ansteuerung auf einen geringen Verschleiß und eine lange Lebensdauer der einzelnen Komponenten geachtet werden.

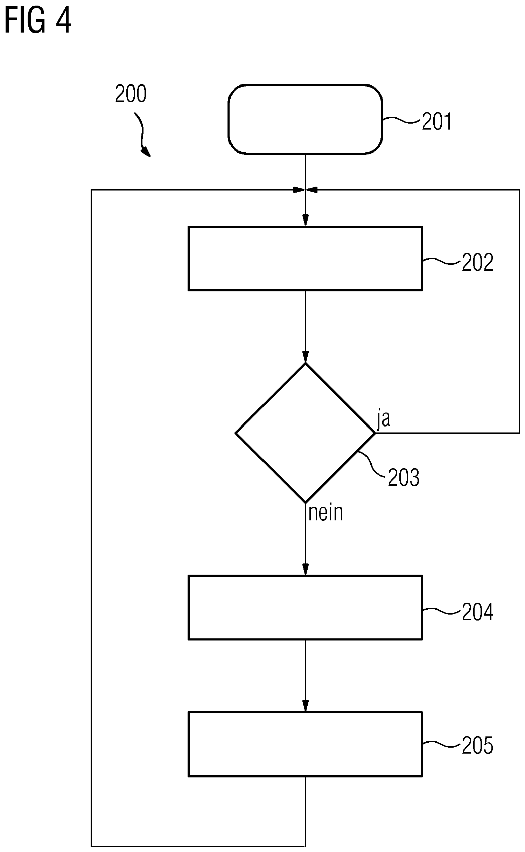

FIG 4 zeigt basierend auf den Beispielen der FIG 2 und 3 beispielhaft ein Ablaufdiagramm eines in der Steuereinrichtung 14 ablaufenden Verfahrens 200 mit einer Mehrzahl Verfahrensschritten, nach denen die Kühlung der Traktionsbatterie 110 gesteuert wird.

Das Verfahren beginnt in Schritt 201, beispielsweise mit der Inbetriebnahme des Triebzugs vor Fahrtbeginn, in dessen Folge auch die elektrischen Hilfsbetriebe des Triebzugs, insbesondere die Klimaanlagen sowie eine oder mehrere zugehörige Steuerungen, in Betrieb genommen werden. In einem ersten Verfahrensschritt 202 erfasst die Steuereinrichtung eine aktuelle Ist-Temperatur der Batteriezellen bzw. Zellmodule der Traktionsbatterie, beispielsweise mittels der in FIG 2 angegebenen Temperatursensoren oder den vorstehend beschriebenen alternativen Methoden.

In einem nachfolgenden zweiten Verfahrensschritt 203 vergleicht die Steuereinrichtung die erfasste Ist-Temperatur mit einer vorgegebenen Soll-Temperatur bzw. einem vorgegebenen Soll-Temperaturband. Sofern die Ist-Temperatur innerhalb des Soll-Temperaturbandes liegt (Zweig "ja"), wird die Erfassung der Ist-Temperatur der Traktionsbatterie fortgesetzt. Sofern die Ist-Temperatur jedoch oberhalb der Soll-Temperatur bzw. außerhalb des Soll-Temperaturbandes liegt (Zweig "nein"), wird das Verfahren in einem nachfolgenden dritten Verfahrensschritt 204 fortgesetzt.

Im dritten Verfahrensschritt 204 ermittelt die Steuereinrichtung basierend auf der bestimmten Differenz zwischen der erfassten Ist-Temperatur und der Soll-Temperatur bzw. dem Soll-Temperaturband einen Bedarf an Kühlleistung für die Kühlung der Traktionsbatterie. Abhängig von diesem bestimmten Kühlleistungsbedarf steuert die Steuereinrichtung in einem nachfolgenden vierten Verfahrensschritt 205 Pumpen, Ventile sowie, sofern erforderlich, weitere Komponenten der Klimaanlage bzw. Klimaanlagen und der Energiespeichereinrichtung an, um entsprechend dem ermittelten Bedarf eine Kühlleistung für die Traktionsbatterie bereitzustellen.

Die beschriebene Steuerung erfolgt dabei solange, bis die Ist-Temperatur wieder der Soll-Temperatur entspricht bzw. diese wieder innerhalb des Soll-Temperaturbandes liegt.

Die dargestellten und vorstehend beschriebenen Verfahrensschritte sind nicht umfassend, weitere oder abgeänderte Verfahrensschritte können ebenfalls in der Steuereinrichtung ablaufen. So kann beispielsweise zwischen den Schritten 204 und 205 ein weiterer Schritt vorgesehen werden, in dem eine Prüfung erfolgt, ob zumindest eine der Klimaanlagen bzw. welche der Klimaanlagen bereits in Betrieb sind und welche Kühlleistung diese aktuell generieren. Basierend auf dieser Information kann die Steuereinrichtung bemessen, ob die zur Kühlung der Traktionsbatterie erforderliche Kühlleistung von einer bereits in Betrieb befindlichen Klimaanlage bereitgestellt werden kann, oder ob eine weitere Klimaanlage hinzu geschaltet werden muss. Wie vorstehend beschrieben, kann durch die Steuereinrichtung eine Lastverteilung zwischen der Kühlung des Fahrgastraums und der Traktionsbatterie sowie, sofern vorhanden, zwischen den mehreren Klimaanlagen erfolgen. Diese Lastverteilung sollte dabei das Ziel eines möglichst effizienten Betriebs der Klimaanlage bzw. Klimaanlagen verfolgen. Auch kann der erste Verfahrensschritt 201 beispielsweise das Erfassen eines zu erwartenden Temperaturanstiegs in den Batteriezellen, beispielsweise aufgrund eines beginnenden Ladevorgangs, umfassen. Dies kann beispielsweise zu einem direkten Übergang in den dritten Verfahrensschritt 204 führen, in dem der zu erwartende Bedarf an Kühlleistung ermittelt wird.

## Patentansprüche

1. Anordnung zur Kühlung einer Traktionsbatterie (110) eines spurgebundenen Fahrzeugs (1), aufweisend:
zumindest eine Energiespeichereinrichtung (11) mit zumindest einer Traktionsbatterie (110) zur Versorgung zumindest einer Traktionseinrichtung (10) des Fahrzeugs (1) mit elektrischer Energie, und
eine Kühleinrichtung (111) zur Kühlung der Traktionsbatterie 10 (110) mittels eines in zumindest einem Kuhlmittelkreislaur (139.1, 139.2) zirkulierenden Kühlmittels,
wobei
die Anordnung ferner aufweist:
zwei Klimatisierungseinrichtungen (13.1, 13.2), welche einen jeweiligen Kältemittelkreislauf (130) aufweisen, in dem zur Klimatisierung eines Fahrgastraums (7) eines Wagens (2) des spurgebundenen Fahrzeugs (1) ein Kältemittel zirkuliert,
wobei die Klimatisierungseinrichtungen (13.1, 13.2) zusätzlich einen jeweiligen Wärmeübertrager (135.1, 135.2) aufweisen, der den Kältemittelkreislauf (130) der jeweiligen Klimatisierungseinrichtung (13.1, 13.2) mit einem jeweiligen Kühlmittelkreislauf (139.1, 139.2) der Kühleinrichtung (111) der Energiespeichereinrichtung (11) koppelt, und
eine Steuereinrichtung (14) zur Steuerung der Klimatisierungseinrichtungen (13.1, 13.2) und der Energiespeichereinrichtung (11).

2. Anordnung nach Anspruch 1, **dadurch gekennzeichnet, dass** die Zirkulation des Kühlmittels in dem jeweiligen Kühlmittelkreislauf (139.1, 139.2) sowie die Zirkulation des Kältemittels in dem jeweiligen Kältemittelkreislauf (130) durch die Steuereinrichtung (14) gesteuert wird.

3. Anordnung nach Anspruch 1 oder 2, **dadurch gekennzeichnet, dass**
in dem jeweiligen Kältemittelkreislauf (130) dem zusätzlichen Wärmeübertrager (135.1, 135.2) jeweils zumindest ein Ventil (137) vorgeschaltet ist, mittels dem die Steuereinrichtung (14) einen Fluss des Kältemittels durch den jeweiligen Wärmeübertrager (135.1, 135.2) steuert.

4. Anordnung nach einem der Ansprüche 1 bis 3, **dadurch gekennzeichnet, dass**
der jeweilige Wärmeübertrager (135.1, 135.2) in dem jeweiligen Kältemittelkreislauf (130) parallel zu einem jeweiligen Verdampfer (131) der Klimatisierungseinrichtungen (13.1, 13.2) angeordnet ist.

5. Spurgebundenes Fahrzeug (1), aufweisend zumindest eine Anordnung nach einem der Ansprüche 1 bis 4, wobei die Steuereinrichtung (14) ferner ausgestaltet ist, einen Fluss des Kältemittels durch den jeweiligen Wärmeübertrager (135.1, 135.2) zu steuern.

6. Fahrzeug (1) nach Anspruch 5, **dadurch gekennzeichnet, dass** die Steuereinrichtung (14) ferner ausgestaltet ist, den Fluss des Kühlmittels in den Kühlmittelkreisläufen (139.1, 139.2) zu steuern.

7. Fahrzeug (1) nach Anspruch 5 oder 6, **dadurch gekennzeichnet, dass**
die Klimatisierungseinrichtungen (13.1, 13.2) jeweils zumindest ein dem jeweiligen Wärmeübertrager (135.1, 135.2) in dem Kältemittelkreislauf (130) vorgeschaltetes Ventil (137) aufweisen, und die Steuereinrichtung (14) ausgestaltet ist, den Fluss des Kältemittels durch den jeweiligen Wärmeübertrager (135.1, 135.2) mittels des Ventils (137) zu steuern.

8. Fahrzeug (1) nach einem der Ansprüche 5 bis 7, **dadurch**
**gekennzeichnet, dass**
die Traktionsbatterie (110) eine Mehrzahl Batteriezellen oder eine Mehrzahl Module mit einer jeweiligen Mehrzahl Batteriezellen aufweist.

9. Fahrzeug (1) nach einem der Ansprüche 5 bis 8, **dadurch**
**gekennzeichnet, dass**
die Energiespeichereinrichtung (13) zusätzlich einer Versorgung von Hilfsbetrieben des Fahrzeugs (1) mit elektrischer Energie dient.

10. Verfahren zur Steuerung einer Anordnung zur Kühlung einer Traktionsbatterie (110) einer Energiespeichereinrichtung (11) eines spurgebundenen Fahrzeugs (1) nach einem der Ansprüche 1 bis 4,
**dadurch gekennzeichnet, dass**
mittels der Steuereinrichtung (14) ein Fluss des Kältemittels durch den in den jeweiligen Kältemittelkreislauf (130) zusätzlich angeordneten Wärmeübertrager (135.1, 135.2) gesteuert wird, wobei der jeweilige Wärmeübertrager (135.1, 135.2) den jeweiligen Kältemittelkreislauf (130) mit dem Kühlmittelkreislauf (139.1, 139.2) koppelt.

11. Verfahren nach Anspruch 10, bei dem in der Steuereinrichtung (14) zumindest die folgenden Schritte ausgeführt werden:
Erfassen einer aktuellen oder zukünftig erwarteten Temperatur der Traktionsbatterie (110),
Vergleichen der erfassten Temperatur der Traktionsbatterie (110) mit einer Soll-Temperatur oder einem Soll-Temperaturband,
Ermitteln eines Bedarfs an Kühlleistung für die Kühlung der Traktionsbatterie (110) abhängig von einer bestimmten Temperaturdifferenz, und
Steuern des Flusses des Kältemittels des jeweiligen Kältemittelkreislaufs (130) der Klimatisierungseinrichtungen (13.1, 13.2) und des Kühlmittels des jeweiligen Kühlmittelkreislaufs (139.1, 139.2) der Kühleinrichtung (111) durch den jeweiligen Wärmeübertrager (135.1, 135.2) abhängig von dem ermittelten Bedarf an Kühlleistung.

12. Verfahren nach Anspruch 11, bei dem die Steuereinrichtung (14) den Fluss des Kältemittels durch einen jeweiligen Verdampfer (131) der Klimatisierungseinrichtungen (13.1, 13.2) zur Kühlung des Fahrgastraums (7) abhängig von dem ermittelten Bedarf an Kühlleistung für die Traktionsbatterie (110) steuert.

## Claims

1. Arrangement for cooling a traction battery (110) of a rail-bound vehicle (1) having:
at least one energy storage device (11) with at least one traction battery (110) for supplying at least one traction device (10) of the vehicle (1) with electrical energy, and a cooling device (111) for cooling the traction battery (110) by means of a coolant circulating in at least one coolant circuit (139.1, 139.2), wherein the arrangement further has,
two air-conditioning devices (13.1, 13.2), which each have a refrigerant circuit (130) in which a refrigerant circulates for air-conditioning a passenger compartment (7) of a carriage (2) of the rail-bound vehicle (1),
wherein each of the air-conditioning devices (13.1, 13.2) additionally has a heat exchanger (135.1, 135.2) which couples the refrigerant circuit (130) of the respective air-conditioning device (13.1, 13.2) to a respective coolant circuit (139.1, 139.2) of the cooling device (111) of the energy storage device (11), and
a control device (14) for controlling the air-conditioning devices (13.1, 13.2) and the energy storage device (11)

2. Arrangement according to claim 1, **characterised in that** the circulation of the coolant in the respective coolant circuit (139.1, 139.2) and the circulation of the refrigerant in the respective refrigerant circuit (130) is controlled by the control device (14).

3. Arrangement according to claim 1 or 2, **characterised in that**
each at least one valve (137), by means of which the control device (14) controls a flow of the refrigerant through the respective heat exchanger (135.1, 135.2), is arranged upstream of the additional heat exchanger (135.1, 135.2) in the respective refrigerant circuit (130).

4. Arrangement according to one of claims 1 to 3, **characterised in that**
the respective heat exchanger (135.1, 135.2) is arranged in the respective refrigerant circuit (130) parallel to a respective evaporator (131) of the air-conditioning devices (13.1, 13.2).

5. Rail-bound vehicle (1) having at least one arrangement according to one of claims 1 to 4, wherein the control device (14) is further embodied to control a flow of the refrigerant through the respective heat exchanger (135.1, 135.2).

6. Vehicle (1) according to claim 5, **characterised in that** the control device (14) is further embodied to control the flow of the coolant in the coolant circuits (139.1, 139.2).

7. Vehicle (1) according to claim 5 or 6, **characterised in that** each of the air-conditioning devices (13.1, 13.2) has at least one valve (137) arranged upstream of the respective heat exchanger (135.1, 135.2) in the refrigerant circuit (130), and the control device (14) is embodied to control the flow of the refrigerant through the respective heat exchanger (135.1, 135.2) by means of the valve (137).

8. Vehicle (1) according to one of claims 5 to 7, **characterised in that** the traction battery (110) has a plurality of battery cells or a plurality of modules with a respective plurality of battery cells.

9. Vehicle (1) according to one of claims 5 to 8, **characterised in that**
the energy storage device (13) additionally serves to supply auxiliaries of the vehicle (1) with electrical energy.

10. Method for controlling an arrangement for cooling a traction battery (110) of an energy storage device (11) of a rail-bound vehicle (1) according to one of claims 1 to 4, **characterised in that**
the control device (14) controls a flow of the refrigerant through the heat exchanger (135.1, 135.2) additionally arranged in the respective refrigerant circuit (130), wherein the respective heat exchanger (135.1, 135.2) couples the respective refrigerant circuit (130) to the coolant circuit (139.1, 139.2).

11. Method according to claim 10 with which at least the following steps are carried out in the control device (14):
detecting a current or expected future temperature of the traction battery (110),
comparing the detected temperature of the traction battery (110) with a target temperature or a target temperature range, ascertaining the required cooling capacity for cooling the traction battery (110) in dependence on a determined temperature difference and
controlling the flow of the refrigerant in the respective refrigerant circuit (130) of the air-conditioning devices (13.1, 13.2) and of the coolant in the respective coolant circuit (139.1, 139.2) of the cooling device (111) through the respective heat exchanger (135.1, 135.2) in dependence on the ascertained required cooling capacity.

12. Method according to claim 11 with which
the control device (14) controls the flow of the refrigerant through a respective evaporator (131) of the air-conditioning devices (13.1, 13.2) for cooling the passenger compartment (7) in dependence on the ascertained required cooling capacity for the traction battery (110).

## Revendications

1. Système de refroidissement d'une batterie (110) de traction d'un véhicule (1) guidé sur rail, comportant :
au moins un dispositif (11) d'accumulation d'énergie ayant au moins une batterie (110) de traction pour l'alimentation d'au moins un dispositif (10) de traction du véhicule (1) en énergie électrique, et
un dispositif (111) de refroidissement pour le refroidissement de la batterie (110) de traction au moyen d'un réfrigérant circulant dans au moins un circuit (139.1, 139.2) de réfrigérant,
dans lequel
le système comporte en outre :
deux dispositifs (13.1, 13.2) de conditionnement d'air, qui ont un circuit (130) respectif de réfrigérant, dans lequel un réfrigérant circule pour le conditionnement d'air d'un espace (7) réservé aux passagers d'un voiture (2) du véhicule (1) guidé sur rail, dans lequel les dispositifs (13.1, 13.2) de conditionnement d'air ont en outre un échangeur de chaleur (135.1, 135.2) respectif, qui met le circuit (130) de réfrigérant du dispositif (13.1, 13.2) respectif de conditionnement d'air en communication avec un circuit (139.1, 139.2) respectif de réfrigérant du dispositif (111) de refroidissement du dispositif (11) d'accumulation d'énergie, et
un dispositif (14) de commande pour la commande des dispositifs (13.1, 13.2) de conditionnement d'air et du dispositif (11) d'accumulation d'énergie.

2. Système suivant la revendication 1, **caractérisé en ce que** la circulation du réfrigérant dans le circuit (139.1, 139.2) respectif de réfrigérant, ainsi que la circulation du réfrigérant dans le circuit (130) respectif de réfrigérant, est commandée par le dispositif (14) de commande.

3. Système suivant la revendication 1 ou 2, **caractérisé en ce qu'**il est monté, dans le circuit (130) respectif de fluide réfrigérant, avant l'échangeur de chaleur (135.1, 135.2) supplémentaire, respectivement au moins un robinet (137), au moyen duquel le dispositif (14) de commande commande un flux du réfrigérant dans l'échangeur de chaleur (135.1, 135.2) respectif.

4. Système suivant l'une des revendications 1 à 3, **caractérisé en ce que** l'échangeur de chaleur (135.1, 135.2) respectif est monté dans le circuit (130) respectif de réfrigérant, en parallèle avec un évaporateur (131) respectif des dispositifs (13.1, 13.2) de conditionnement d'air.

5. Véhicule (1) guidé sur rail, comportant :
au moins un système suivant l'une des revendications 1 à 4,
dans lequel le dispositif (14) de commande est conformé en outre pour commander un flux du réfrigérant dans l'échangeur de chaleur (135.1, 135.2) respectif.

6. Véhicule (1) suivant la revendication 5, **caractérisé en ce que** le dispositif (14) de commande est conformé en outre pour commander le flux du réfrigérant dans les circuits (139.1, 139.2) de réfrigérant.

7. Véhicule (1) suivant la revendication 5 ou 6, **caractérisé en ce que**
les dispositifs (13.1, 13.2) de conditionnement d'air ont chacun au moins un robinet (137) monté dans le circuit (130) de réfrigérant en amont de l'échangeur de chaleur (135.1, 135.2) respectif et le dispositif (14) de commande est conformé pour commander le flux du réfrigérant dans l'échangeur de chaleur (135.1, 135.2) respectif au moyen du robinet (137).

8. Véhicule (1) suivant l'une des revendications 5 à 7, **caractérisé en ce que**
la batterie (110) de traction a une pluralité d'éléments de traction ou une pluralité de modules ayant une pluralité respective d'éléments de batterie.

9. Véhicule (1) suivant l'une des revendications 5 à 8, **caractérisé en ce que**
le dispositif (13) d'accumulation d'énergie sert supplémentairement à alimenter en énergie électrique des services auxiliaires du véhicule (1).

10. Procédé de commande d'un système de refroidissement d'une batterie (110) de traction d'un dispositif (11) d'accumulation d'énergie d'un véhicule (1) guidé sur rail suivant l'une des revendications 1 à 4,
**caractérisé en ce que**
au moyen du dispositif (14) de commande, on commande un flux du réfrigérant dans l'échangeur de chaleur (135.1, 135.2) monté supplémentairement dans le circuit (130) respectif de réfrigérant, dans lequel l'échangeur de chaleur (135.1, 135.2) respectif couple le circuit (130) respectif de réfrigérant au circuit (139.1, 139.2) de réfrigérant.

11. Procédé suivant la revendication 10, dans lequel on effectue, dans le dispositif (14) de commande, au moins les stades suivants :
relevé d'une température escomptée en cours ou à venir de la batterie (110) de traction,
comparaison de la température relevée de la batterie (110) de traction à une température de consigne ou à une plage de température de consigne,
détermination d'un besoin de puissance de refroidissement pour le refroidissement de la batterie (110) de traction, en fonction d'une différence de température déterminée, et
commande du flux du réfrigérant du circuit (130) respectif de réfrigérant des dispositifs (13.1, 13.2) de conditionnement d'air et du flux du circuit (139.1, 139.2) respectif de réfrigérant du dispositif (111) de réfrigérant par l'échangeur de chaleur (135.1, 135.2) respectif, en fonction du besoin déterminé de puissance de refroidissement.

12. Procédé suivant la revendication 11, dans lequel le dispositif (14) de commande commande le flux du réfrigérant dans un évaporateur (131) respectif des dispositifs (13.1, 13.2) de conditionnement d'air pour le refroidissement de l'espace (7) réservé aux passagers, en fonction du besoin déterminé de puissance de refroidissement pour la batterie (110) de traction.
